# EUROPEAN PATENT SPECIFICATION

(11) **EP 0 472 723 B1**
(45) Date of publication and mention of the grant of the patent: **01.12.1993**
(21) Application number: 91907350.2
(22) Date of filing: 04.03.1991
(51) Int. Cl.: F23K 5/18

(54) **IMPROVED COMBINATION STEAM AND FUEL OIL SUPPLY AND PURGE VALVE WITH RECIRCULATION FEATURE**
KOMBINIERTES ZUFUHR- UND ENTLÜFTUNGSVENTIL FÜR DAMPF UND BRENNÖL MIT RÜCKFÜHRUNGSEIGENSCHAFTEN
SOUPAPE AMELIOREE DE PURGE ET D'ALIMENTATION COMBINEES DE VAPEUR ET DE MAZOUT A RECIRCULATION

(30) Priority: 14.03.1990 US 493198
(43) Date of publication of application: 04.03.1992
(73) Proprietor: ITT INDUSTRIES, INC. (a Delaware corporation), New York, NY 10019-5490 (US)
(72) Inventor: BUCHANAN, Bascom, Frank, Sarasota, FL 33580 (US); BUCHANAN, Joseph, R., Portland, CT 06480 (US)
(74) Representative: Larsson, Sten
(86) International application number: US9101471
(87) International publication number: WO9114135

(56) References cited:
- US-A- 3 012 570
- US-A- 4 454 892
- US-A- 4 846 226

## Description

### BACKGROUND OF THE INVENTION

In the firing of industrial oil burners and auxiliary or igniter burners associated with large oil fired utility or industrial boilers, it is a conventional practice to employ steam as an atomizing agent for the fuel oil. Moreover, the same source of steam is usually employed in purging fuel oil lines for safety and other considerations. A combination valve of the type under consideration according to the first portion of claim 1 which controls the supply of both steam and fuel oil during firing and purging operations of burner systems is shown in US-A- 4,146,0̸56. This valve is particularly well suited to the efficient control of firing and purge operations as aforesaid and is quite satisfactory in all respects. There is, however, one additional feature recently found desirable and which is lacking in the patented valve.

More particularly, oil supplied to the type of burners mentioned may be highly viscous and it may be necessary to heat the same in its storage tank in order to lower its viscosity and thereby provide for the free flow of the oil to the burner. When the fuel oil valve is closed and oil flow terminated, the oil may become highly viscous and create an impediment or even preclude restarting of the burner. If, on the other hand, oil is recirculated to the tank for reheating when its control or supply valve is closed, a desirably low level of oil viscosity may be maintained in the line leading to the valve and returning therefrom to the tank.

It is a general object of the present invention to provide an improved combination steam and fuel oil supply valve of the type mentioned and which includes a simple and straight- forward means providing for the recirculation of fuel oil from the valve to its storage tank or reservoir when the valve is closed to terminate the flow of fuel oil to its associated burner.

### SUMMARY OF THE INVENTION

In fulfillment of the foregoing general object, according to the characterizing portion of claim 1 an improved combination steam and fuel oil supply and purge valve is provided and comprises a valve body defining steam and oil inlet ports and at least one discharge port. An oil recirculation port is also provided. A steam purge passageway interconnects the steam inlet and the discharge port and an oil supply passageway interconnects the oil inlet port and the discharge port. Finally an oil recirculation passageway interconnects the oil inlet port and the oil recirculation port.

A steam valve and actuator member is movable between first, second and third positions in the valve body and is operable to open and close the steam purge passageway. A double acting oil supply & recirculation valve member which is movable between first and second positions respectively to open and close the oil supply passageway and to close and open the oil recirculation passageway has an associated biasing means which urges the same toward its second position. The steam valve and actuator member in its first and second positions respectively closes and opens the steam purge passageway. In its third position, the steam valve and actuator member closes the steam purge passageway and actuates the oil valve member whereby to urge the latter to its first position in opposition to its biasing means and thereby to open the oil supply passageway and close the oil recirculation passageway. The oil recirculation passageway has a normally open condition when the oil valve member is in its closed position.

More particularly, the valve body includes opposed spaced apart first and second valve seats each with a valve opening respectively for the control of supply and recirculation oil flow. The oil inlet port and the oil valve member are disposed between the first and second seats in the valve and the valve member is movable in one and an opposite direction between said first and second positions respectively. The first and second positions respectively represent engagement with the second and first seats whereby to open the oil passageway and close the recirculation passageway and to close the oil supply passageway and open the oil recirculation passageway.

The actuator portion of the steam valve and actuator member preferably takes the form of an elongated plunger which is engagable with the oil valve member and operable to move the same to its first position when the steam valve and actuator resides in its third position. Thus the aforesaid sequence of operation is positively and mechanically assured.

The specific construction of the oil valve member and its associated seats may vary but preferably comprises a plug type valve for a centrally bored oil supply seat. On an opposite side of the oil valve member a flat disc-like valve member is provided and the recirculation seat has a central opening for a valve stem with a plurality of small openings arranged circumaxially thereabout. Thus, the disc-like valve member opens and closes the small openings on engagement with the recirculation valve seat.

When steam or perhaps air is required for atomizing, or other purposes, the combination valve of the invention is provided with both steam and oil discharge ports as described. Thus, during a purge operation both steam and oil discharge lines may be supplied with steam or air. During running or firing operation, oil is of course supplied to the oil discharge port and its associated conduit and thence to the burner while steam or air may be supplied to the steam discharge port and its associated conduit.

In an alternative embodiment of the combination valve of the present invention, and when for example mechanically atomized burners are served by the valve, it is only necessary to provide a single discharge port and associated conduit. Thus, during a purge operation, steam or air may be provided from a steam inlet conduit and the associated steam port to the discharge port and its associated conduit. During burner operation, the discharge port and its associated conduit is of course supplied with fuel oil for delivery to the burner.

### BRIEF DESCRIPTION OF THE DRAWINGS

Fig. 1 of the drawings is a vertical sectional view through the improved valve of the present invention and an illustrative actuator associated therewith, various valve members being illustrated in full line in a closed position and in broken line in open positions.

Fig. 2 is a vertical sectional view similar to Fig. 1 but showing a valve forming a second embodiment of the present invention, a single discharge port and conduit replacing the dual discharge ports and conduits of the valve of Fig. 1.

Fig. 3 is a fragmentary horizontal sectional view taken generally as indicated at 3, 3 in Fig. 1 and illustrating an oil recirculation valve seat.

Fig. 4 is an enlarged fragmentary section of a portion of the improved valve illustrating an oil valve member in its second position wherein an oil supply passageway through the valve is closed and an oil recirculation passageway through the valve is open.

Fig. 5 is a view similar to Fig. 4 but showing the oil valve member in a first position wherein the oil supply passageway is open and the oil recirculation passageway closed.

### DESCRIPTION OF PREFERRED EMBODIMENTS

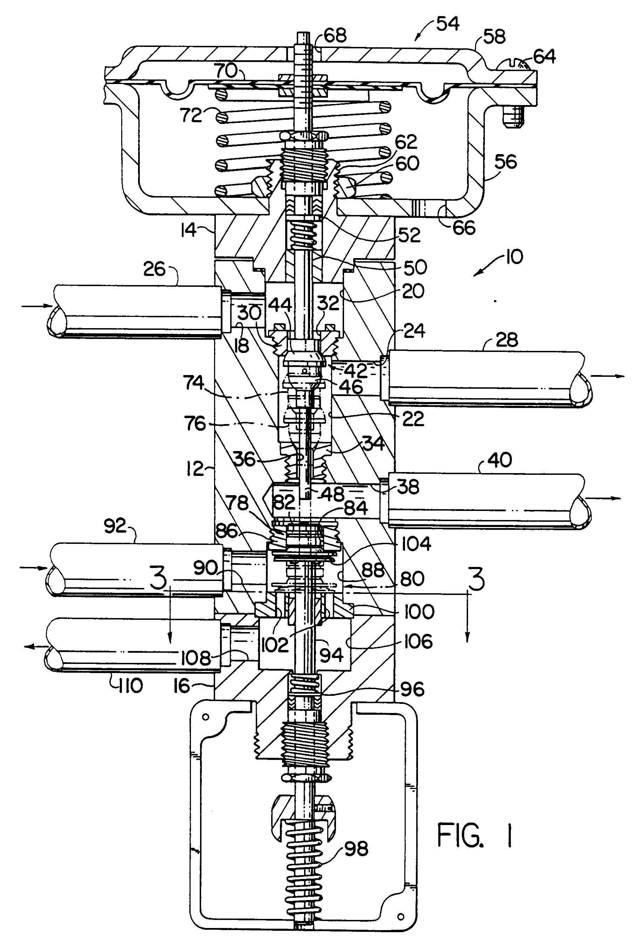

Referring particularly to Fig. 1, an improved combination valve in accordance with the present invention is indicated generally at 10̸ and comprises a central or intermediate body portion 12 which takes a cylindrical form and which has associated upper and lower closure members or plugs 14, 16. The plugs 14, 16 may be secured in assembled position by appropriate screws or the like not shown. A steam inlet port 18 communicates with a steam inlet chamber 20̸ and a steam discharge chamber 22 communicates with steam discharge port 24. Steam inlet and discharge conduits 26, 28 are associated respectively with the inlet and discharge ports 18, 24.

Steam valve seat 30̸ has a central axial bore 32 which establishes communication between the steam inlet and discharge chambers 20̸, 22. At a lower end portion of the chamber 22 purge valve seat 34 has a central axial bore 36 which establishes communication between chamber 22 and an oil discharge port 38 therebeneath. The oil discharge port 38 has a corresponding conduit 40̸ which extends to an associated burner as does the steam discharge conduit 28.

As will be apparent from the foregoing, a steam supply passageway can be established by the steam inlet or supply conduit 26, steam inlet port 18, steam inlet chamber 20̸, steam valve bore 32, steam discharge chamber 22, steam discharge port 24 and steam discharge conduit 28. Similarly, a steam purge passageway can be established by steam inlet or supply conduit 26, steam inlet port 18, steam inlet chamber 20̸, bore 32, steam discharge chamber 22, bore 36, discharge port 38 and oil discharge conduit 40̸.

In accordance with the invention, a combined steam valve and actuator member is provided and is indicated generally at 42. The steam valve and actuator member 42 includes a valve having upper and lower portions 44, 46 which cooperate respectively with the steam valve seat 30̸ and the purge valve seat 34. An actuator portion of the member in the form of an elongated plunger or stem 48 has a function to be described more fully hereinbelow. Upwardly extending stem 50̸ associated with the valve and actuator member has a sealing or packing means 52 associated therewith and extends therefrom upwardly in Fig. 1 to an actuating means.

The actuating means for the steam valve and actuator member 42 may vary widely within the scope of the invention and may comprise pneumatic, hydraulic, electrical or other means. An illustrative actuating means indicated generally at 54 is of the pneumatic type. Two part housing 56, 58 for the actuator 54 comprises a lower cup shaped member secured in an upright position by nut 60̸ threadably engaged with an appropriate threaded stud 62 which is formed on and projects axially upwardly from the plug or closure 14. Upper housing member 58 takes an inverted cup shape and is secured to the lower cup member by means of suitable annular flanges respectively on the upper and lower members and secured together by appropriate screws or bolts 64. An atmospheric port or vent 66 is provided in the lower housing member 56 and a supply or control port 68 in the upper housing member 58 may be connected with a controlled source of air or other gas under pressure. Disposed within the actuator housing is a diaphragm 70̸ peripherally clamped between the housing flanges and attached to an upper end portion of the valve stem 50̸. A biasing or return spring 72, which may be of the coil type, has an upper end portion seated beneath the diaphragm 70̸ and a lower end portion seated on the bottom wall of the lower cup shaped housing member 56.

As will apparent, air or other gas under pressure may be supplied through the port 68 for actuation of the diaphragm 70̸, the stem 50̸ and its valve and actuator member 42, the spring 72 supplying the necessary biasing or reaction force. Moreover, it will apparent that appropriate control or regulation of air pressure will result in initial movement of the valve and actuator member 42 to an intermediate or purge position as illustrated by broken line 74. On an increase in the regulated pressure supplied through the port 68, further downward movement of the valve and actuator member 42 will occur to the broken line position of the valve illustrated at 76. In the reverse direction, a controlled reduction in supply pressure to the diaphragm 70̸ will allow the return spring 72 to urge the diaphragm, stem, and valve and actuator member upwardly to its closed full line position. Alternatively and if desired, a step reduction in pressure may be employed to move the valve and actuator member sequentially from its lower-most broken line position 76 to its intermediate broken line position at 74 for a purge operation, and thereafter to the full line closed position.

In the first, full line, or closed position of the steam valve, its upper generally frusto-conical portion 44 engages the steam seat 30̸ and a plug portion thereabove enters the seat bore 32. Thus, the steam inlet or supply port 18 and chamber 20̸ are effectively isolated from the remainder of the valve passageways, ports, and conduits. In the second or intermediate broken line position 74, the frusto-conical seating surface 44 is displaced axially downwardly from the steam seat 30̸ whereby to open the steam inlet chamber 20̸ to the steam discharge chamber 22 through the bore 32 in the seat 30̸. Thus, a first passageway is provided interconnecting the steam inlet and discharge ports and comprises inlet port 18, steam inlet chamber, bore 32 etc. as set forth above. Steam discharge flow through the conduit or line 28, however, may be regarded as merely incidental, purging of steam lines not ordinarily being required.

Steam flow through the aforementioned purge passageway is, however, highly significant and results in the desired purging of the oil line or conduit 40̸. The second or purge passageway comprises steam inlet port 18, steam inlet chamber 20̸, bore 32, steam discharge chamber 22, bore 36, oil discharge port 38, and oil discharge conduit 40̸.

When the steam valve and actuator member 42 is in its lower-most or third position, the lower portion 46 of the valve closes the bore 36 in the purge seat 34 as illustrated and steam discharge through the oil discharge conduit 40̸ is terminated. At the same time, the actuator stem 48 associated with the steam valve 42 engages an oil valve member, indicated generally in full line at 78, and urges the same downwardly to its broken line position 80̸. In its full line position, the oil valve member 78 has a plug portion 82 which enters and closes a bore 84 in oil valve seat 86. In its lower broken line position at 80̸, the bore 84 is opened to an oil inlet chamber 88 therebeneath which in turn communicates with an oil inlet or supply port 90̸ and an oil supply conduit 92. Thus, an oil supply passageway is established from the supply conduit 92 through the port 90̸, chamber 88, bore 84 to the oil discharge port 38 and its associated discharge conduit 40̸. This condition of the valve members prevails with the oil burner in operation and with atomizing steam flowing through the discharge conduit 28 and fuel oil similarly flowing to the burner through the discharge conduit 40̸.

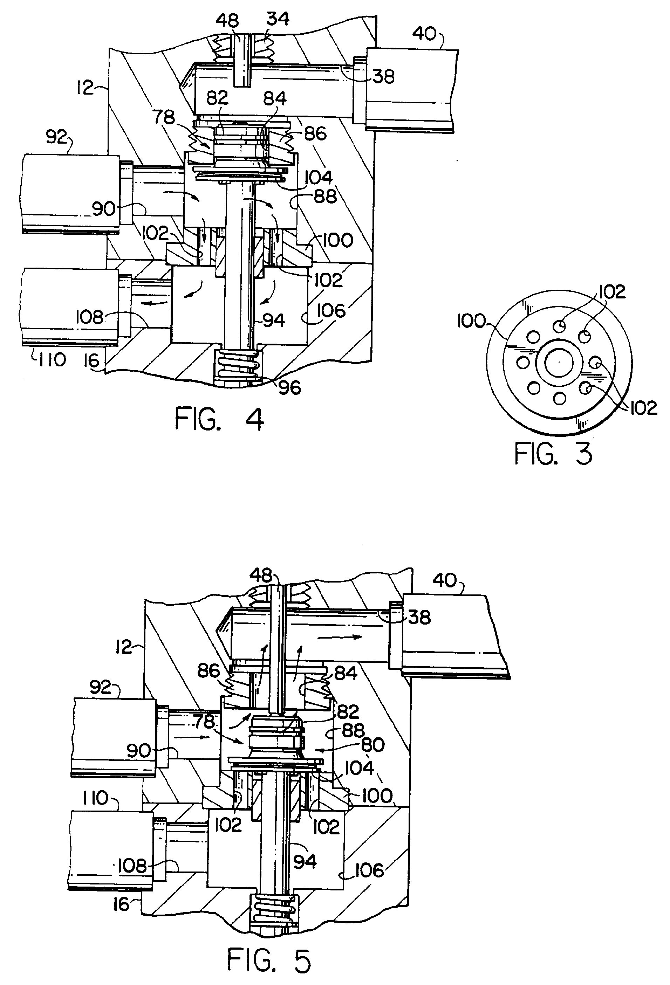

The oil valve 78 also has an associated stem 94 which extends downwardly therefrom past a sealing or packing device 96 to a biasing spring 98. The biasing spring 98 urges the oil valve member to its second or full line position at 78 and is compressed when the actuator member 48 urges the oil valve member downwardly to its first or broken line position at 80̸. An associated recirculation seat 10̸0̸ has a plurality of small openings 10̸2, 10̸2 provided therein as best illustrated in Fig. 3. That is, the stem 94 extends downwardly through a central bore in the seat 10̸0̸ and the plurality of small valve openings 10̸2, 10̸2 are arranged circumaxially in the valve seat 10̸0̸ about the central bore and the stem 94. At a lower portion thereof the valve 78 has a flat disc-like member 10̸4 which cooperates with the valve openings 10̸2, 10̸2. Thus, with the valve member at its lowermost position 80̸, disc 10̸4 serves to close the openings 10̸2, 10̸2, Fig. 5. When the oil valve member is in its upper full line position 78, Fig. 4, the openings 10̸2, 10̸2 are open and in communication with the oil inlet chamber 88. Thus, a recirculation chamber 10̸6 beneath seat 10̸0̸ receives oil from the openings 10̸2, 10̸2 and the oil in turn flows through a recirculation port 10̸8 and a return conduit 110̸. As will be apparent, the viscosity of the oil may thus be maintained at a low level whenever the oil valve member 78 is in its full line or closed position with recirculation occurring at a desired location in close proximity to the oil burner.

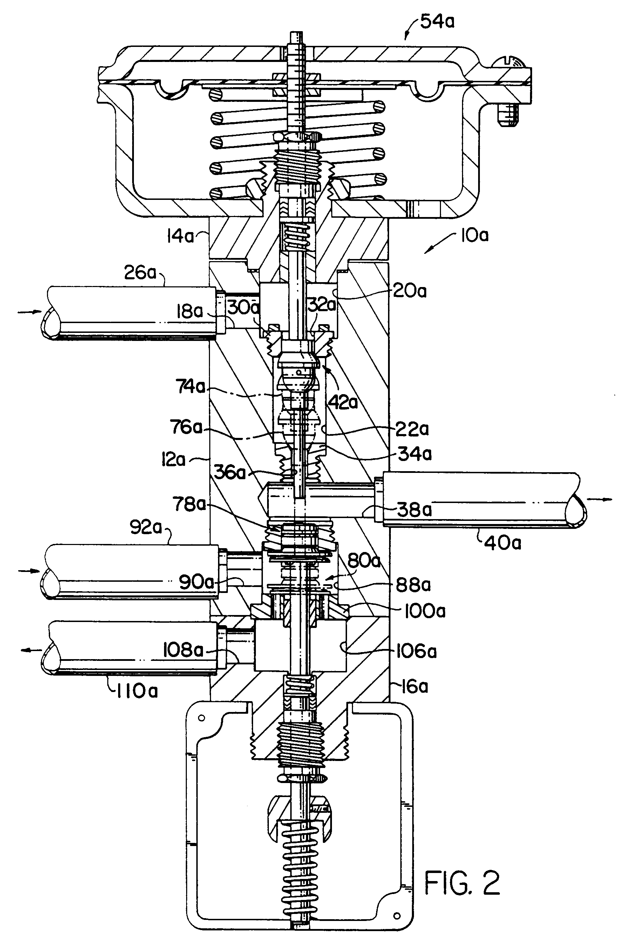

Referring now to Fig. 2, a valve construction 10̸a forming a second embodiment of the present invention may be employed advantageously with mechanically atomized burners not requiring steam flow to the burners for atomization during burner operation. The valve 10̸a may be substantially identical in all respects with the valve 10̸ of Fig. 1 except for the elimination of the steam discharge port 24 and its associated conduit 28. Thus, a single oil supply conduit 40̸a serves alternatively for a purge and oil supply or burner operation function. When steam valve and actuator member 42a is in the purge position as illustrated in broken line at 74a, steam flows from the supply conduit 26a through the steam inlet port 18a, steam inlet chamber 20̸a, bore 32a in seat 30̸a, chamber 22a, bore 36a in purge seat 34a, and to the oil discharge port 38a and conduit 40̸a.

Operation of the valve 10̸a of Fig. 2 for the supply of oil through the conduit 40̸a during burner operation is identical to that described above for valve 10̸ and the provisions for recirculation of the oil through the conduit 110̸a may also be identical with those described above.

From the foregoing, it will be apparent that a desirably simple and straight-forward recirculation feature is provided in the improved combination steam and fuel oil supply and purge valve of the present invention. Recirculation is achieved in an efficient and fool proof manner and a substantially improved valve construction and operation results.

## Claims

1. An improved combination steam and fuel oil supply and purge valve comprising a valve body (12) defining steam and oil inlet ports (18) and (90) respectively, at least one discharge port (24), an oil recirculation port (108), a steam purge passageway interconnecting said steam inlet (18) and discharge (24) ports, an oil supply passageway interconnecting said oil inlet (90) and discharge ports (38), a steam valve and actuator member (42) movable between first, second, and third positions in said valve body (12) and operable to open and close said steam purge passageway, a double acting oil supply and recirculation valve member (78) movable between first and second positions respectively to open and close said oil supply passageway and directly and positively close and open said oil recirculation passageway, biasing means (98) urging said oil supply and recirculation valve member (78) towards its second position, said steam valve and actuator member (42) in its first and second positions respectively closing and opening said steam purge passageway, and said valve and actuator member (42) in its third position closing said steam purge passageway and actuating said oil supply and recirculation valve member (78) whereby to urge said member to its first position in opposition to said biasing means (98) and thereby open said oil supply passageway and close said oil recirculation passageway, characterized in that an oil recirculation passageway is arranged which interconnects said inlet port (90) and said oil recirculation port (108), that said oil recirculation passageway has a normally open condition with said oil supply and recirculation valve member (78) in its closed position and that a steam supply passageway is arranged which interconnects said steam inlet (18) and discharge (24) ports.

2. An improved combination steam and fuel oil supply and purge valve according to claim 1, characterized in that said valve includes opposed spaced apart oil supply (86) and recirculation valve (100) seats each with a valve opening respectively for the control of supply oil and recirculation oil flow, and wherein said oil inlet port (90) and oil supply and recirculation valve member (78) are disposed between said seats and corresponding valve openings with the valve member movable in one and opposite directions between its said first and second positions respectively, said first and second positions being in engagement respectively with said recirculation (100) and oil supply (86) seats whereby to open the oil supply passageway and close the recirculation passageway and close the oil supply passageway and open the oil recirculation passageway.

3. An improved combination steam and fuel oil supply and purge valve according to claim 2, characterized in that said valve and actuator members are of generally cylindrical and axially slidable types in an end-to-end arrangement with the actuator portion (48) of the steam valve and actuator member (42) comprising an elongated plunger engagable with the oil supply and recirculation valve member (78) and operable to move the same to its first position when the steam valve and actuator member ( 42) resides at its said third position.

4. An improved combination steam and fuel oil supply and purge valve according to claim 3, characterized in that the oil supply and recirculation valve member (78) has an associated axially projecting stem (94) operatively connected remotely with the biasing means (98) and extending through the recirculation seat (100), said valve opening in said recirculation seat comprising a plurality of small axial openings (102) extending through the seat and arranged circumaxially about the stem (94).

5. An improved combination steam and fuel oil supply and purge valve according to claim 4, characterized in that the oil supply seat (86) has a central axial opening, and wherein the oil supply and recirculation valve member (78) has a portion thereof in plug form for entering and closing said central opening and an opposite flat disc-like portion (104) for overlaying and closing said plurality of small axial openings (102) in said recirculation valve seat (100).

## Patentansprüche

1. Verbessertes kombiniertes Zufuhr- und Entlüftungsventil für Dampf und Brennöl, mit einem Ventilkörper (12), der eine Dampf- und eine Öleintrittsöffnung (18 bzw. 90) und wenigstens eine Austrittsöffnung (24) definiert, mit einer Ölrücklauföffnung (108), mit einer die Dampfeintrittsöffnung (18) und die Austrittsöffnung (24) miteinander verbindenden Dampfentlüftungspassage, mit einer die Öleintrittsöffnung (90) und eine Austrittsöffnung (38) miteinander verbindenden Ölzufuhrpassage, mit einem Dampfventil- und Betätigungselement (42), das zwischen einer ersten, einer zweiten und einer dritten Stellung in dem Ventilkörper (12) bewegbar ist und zum Öffnen und Schließen der Dampfentlüftungspassage betätigbar ist, mit einem Doppelwirkungs-Ölzufuhr- und Ölrücklaufventilelement (78), das zwischen einer ersten und einer zweiten Stellung zum Öffnen bzw. Schließen der Ölzufuhrpassage sowie zum direkten und positiven Schließen und Öffnen der Ölrücklaufpassage beweglich ist, mit einer Vorspanneinrichtung (98), die das Ölzufuhr- und Ölrücklaufventilelement (78) in Richtung auf seine zweite Stellung drückt, wobei das Dampfventil- und Betätigungselement (42) in seiner ersten und seiner zweiten Stellung die Dampfentlüftungspassage schließt bzw. öffnet und das Dampfventil- und Betätigungselement (42) in seiner dritten Stellung die Dampfentlüftungspassage schließt und das Ölzufuhr- und Ölrücklaufventilelement (78) betätigt, um dadurch das Element entgegen der Kraft der Vorspanneinrichtung (98) in seine erste Stellung zu drücken und dadurch die Ölzufuhrpassage zu öffnen und die Ölrücklaufpassage zu schließen,
dadurch gekennzeichnet, daß eine Ölrücklaufpassage vorgesehen ist, die die Eintrittsöffnung (90) und die Ölrücklauföffnung (108) miteinander verbindet, daß die Ölrücklaufpassage sich in einem normalerweise geöffneten Zustand befindet, wobei sich das Ölzufuhr- und Ölrücklaufventilelement (78) in seiner geschlossenen Stellung befindet, und daß eine Dampfzufuhröffnung vorgesehen ist, die die Dampfeintrittsöffnung (18) und die Austrittsöffnung (24) miteinander verbindet.

2. Verbessertes kombiniertes Zufuhr- und Entlüftungsventil für Dampf und Brennöl nach Anspruch 1,
dadurch gekennzeichnet, daß das Ventil einen Ölzufuhrventilsitz (86) und einen Ölrücklaufventilsitz (100) aufweist, die einander mit Abstand gegenüberliegenden und deren jeder eine Ventilöffnung zum Steuern der Zufuhröl-Strömung bzw. der Rücklauföl-Strömung aufweist, und daß die Öleintrittsöffnung (90) und das Ölzufuhr- und Ölrücklaufventilelement (78) zwischen den Sitzen und den entsprechenden Ventilöffnungen angeordnet sind, wobei das Ventilelement in einer Richtung sowie einer dazu gegenläufigen Richtung zwischen seiner ersten und seiner zweiten Stellung bewegbar ist, wobei in der ersten und der zweiten Stellung ein Eingriff mit dem Rücklaufsitz (100) bzw. dem Ölzufuhrsitz (86) stattfindet, um dadurch die Ölzufuhrpassage zu öffnen und die Rücklaufpassage zu schließen bzw. die Ölzufuhrpassage zu schließen und die Ölrücklaufpassage zu öffnen.

3. Verbessertes kombiniertes Zufuhr- und Entlüftungsventil für Dampf und Brennöl nach Anspruch 2,
dadurch gekennzeichnet, daß das Ventil- und das Betätigungselement allgemein zylindrisch und axial verschiebbar ausgebildet und Ende an Ende angeordnet sind, wobei der Betätigungsbereich (48) des Dampfventil- und Betätigungselements (42) einen länglichen Kolben umfaßt, der mit dem Ölzufuhr- und Ölrücklaufventilelement (78) in Eingriff bringbar und derart betätigbar ist, daß er dieses in seine erste Stellung bewegt, wenn sich das Dampfventil- und Betätigungselement (42) in seiner genannten dritten Stellung befindet.

4. Verbessertes kombiniertes Zufuhr- und Entlüftungsventil für Dampf und Brennöl nach Anspruch 3,
dadurch gekennzeichnet, daß dem Ölzufuhr- und Ölrücklaufventilelement (78) ein axial wegragender Schaft (94) zugeordnet ist, der über eine Distanz hinweg betriebsmäßig mit der Vorspanneinrichtung (98) verbunden ist und sich durch den Rücklaufsitz (100) hindurcherstreckt, wobei die Ventilöffnung in dem Rücklaufsitz eine Mehrzahl kleiner axialer Öffnungen (102) beinhaltet, die sich durch den Sitz hindurcherstrecken und umfangsmäßig um den Schaft (94) herum angeordnet sind.

5. Verbessertes kombiniertes Zufuhr- und Entlüftungsventil für Dampf und Brennöl nach Anspruch 4,
dadurch gekennzeichnet, daß der Ölzufuhrsitz (86) eine zentrale axiale Öffnung aufweist, und daß das Ölzufuhr- und Ölrücklaufventilelement (78) einen in Stopfenform ausgebildeten Bereich zum Einführen in und Schließen der zentralen Öffnung sowie einen diesem gegenüberliegenden flachen, scheibenartigen Bereich (104) zum Anordnen über und Schließen der mehreren kleinen axialen Öffnungen (102) in dem Rücklaufventilsitz (100) aufweist.

## Revendications

1. Soupape améliorée d'alimentation et de purge combinées de vapeur et de mazout comportant un corps (12) de soupape définissant des orifices d'entrée (18) et (90) de vapeur et de mazout respectivement, au moins un orifice de décharge (24), un orifice (108) de recirculation de mazout, un passage formant purge de vapeur reliant ladite entrée de vapeur (18) et les orifices (24) de décharge, un passage d'alimentation en mazout reliant ladite entrée (90) de mazout et les orifices de décharge (38), une soupape pour vapeur et un élément (42) d'actionnement mobile entre des première, deuxième et troisième positions dans ledit corps (12) de soupape et pouvant être actionné pour ouvrir et fermer ledit passage formant purge de vapeur, un élément (78) formant soupape à double action d'alimentation et de recirculation de mazout, mobiles entre une première et une seconde positions respectivement pour ouvrir et fermer ledit passage d'alimentation de mazout et fermer et ouvrir directement et de manière positive ledit passage de recirculation de mazout, des moyens de sollicitation (98) repoussant ledit élément (78) formant soupape d'alimentation et de recirculation de mazout vers sa seconde position, ladite soupape pour vapeur et l'élément (42) d'actionnement dans sa première et sa deuxième positions fermant et ouvrant respectivement dans ledit passage pour purge de vapeur, et ladite soupape et l'élément (42) formant actionneur dans sa troisième position fermant ledit passage pour purge de vapeur et actionnant ledit élément (78) formant soupape d'alimentation et de recirculation de mazout de manière à repousser ledit élément vers sa première position à l'encontre desdits moyens de sollicitation (98) et par conséquent à ouvrir ledit passage d'alimentation en mazout et à fermer ledit passage de recirculation de mazout, caractérisée en ce qu'un passage de recirculation de mazout est agencé qui relie ledit orifice d'entrée (90) et ledit orifice (108) de recirculation de mazout, en ce que ledit passage de recirculation de mazout est dans un état normalement ouvert ledit élément (78) formant soupape d'alimentation de mazout et de recirculation de mazout étant dans sa position fermée, et en ce qu'un passage d'alimentation de vapeur est agencé qui relie ladite entrée de vapeur (18) et les orifices (24) de décharge.

2. Soupape améliorée d'alimentation et de purge combinées de vapeur et de mazout selon la revendication 1, caractérisée en ce que ladite soupape comporte une soupape (86) d'alimentation et une soupape (100) de recirculation de mazout opposées écartées l'une par rapport à l'autre venant en appui chacune sur des sièges d'une ouverture de soupape respectivement pour la commande de l'écoulement de mazout d'alimentation et de mazout de recirculation, et dans laquelle ledit orifice (90) d'entrée de mazout et l'élément (78) formant soupape d'alimentation de mazout et de recirculation de mazout sont disposés entre lesdits sièges et les ouvertures de soupape correspondantes, l'élément formant soupape étant mobile dans une direction et dans la direction opposée entre sesdites première et seconde positions étant en contact avec lesdits sièges de recirculation (100) et d'alimentation (86) de mazout respectivement de manière à ouvrir le passage d'alimentation de mazout et à fermer le passage de recirculation et à fermer le passage d'alimentation de mazout et ouvrir le passage de recirculation de mazout.

3. Soupape améliorée d'alimentation et de purge combinées de vapeur et de mazout selon la revendication 2, caractérisée en ce que ladite soupape et les éléments d'actionnement sont de manière générale du type cylindrique et pouvant coulisser axialement dans un agencement bout à bout, la partie (88) formant actionneur de la soupape pour vapeur et l'élément (42) d'actionnement comportant un piston allongé pouvant être en contact avec l'élément (78) formant soupape d'alimentation et de recirculation de mazout et pouvant être actionné pour déplacer ce dernier vers sa première position lorsque la soupape pour vapeur et l'élément (42) d'actionnement sont situés dans leur dite troisième position.

4. Soupape améliorée d'alimentation et de purge combinées de vapeur et de mazout selon la revendication 3, caractérisée en ce que l'élément (78) formant soupape d'alimentation et de recirculation de mazout a une queue (94) associée faisant saillie axialement reliée de manière opérationnelle, en étant à distance, aux moyens de sollicitation (98) et s'étendant à travers le siège (100) de recirculation, ladite ouverture de soupape dans ledit siège de recirculation comportant plusieurs petites ouvertures axiales (102) s'étendant à travers le siège et agencées circonférentiellement autour de la queue (94).

5. Soupape améliorée d'alimentation et de purge combinées de vapeur et de mazout selon la revendication 4, caractérisée en ce que le siège (86) d'alimentation de mazout a une ouverture axiale centrale et dans laquelle l'élément (78) formant soupape d'alimentation et de recirculation de mazout a une partie en forme de cheville destinée à ouvrir et à fermer ladite ouverture centrale et une partie (104) opposée analogue à un disque plat destinée à recouvrir et fermer lesdites plusieurs petites ouvertures axiales (102) situées dans ledit siège (100) de soupape de recirculation.
